# EUROPÄISCHE PATENTSCHRIFT

(11) **EP 2 393 618 B1**
(45) Veröffentlichungstag und Bekanntmachung des Hinweises auf die Patenterteilung: **09.10.2019**
(21) Anmeldenummer: 10703232.8
(22) Anmeldetag: 04.02.2010
(51) Int. Cl.: B22D 11/14, B22D 33/00, B22D 41/00, B22D 41/02, B22D 41/14, B22D 41/30, B22D 41/52, B25J 19/06, C21C 1/00, C22B 5/00, G01N 35/04, G01N 37/00

(54) **VORICHTUNG ZUR ARBEITSRAUMERWEITERUNG**
DEVICE FOR ENHANCING WORK AREA
DISPOSITIF DE ELARGISSEMENT DE ATELIER DE TRAVAIL

(30) Priorität: 04.02.2009 DE 102009007540; 04.02.2009 DE 102009007542; 04.02.2009 DE 102009007541; 29.10.2009 WO PCT/EP2009/007768
(43) Veröffentlichungstag der Anmeldung: 14.12.2011
(73) Patentinhaber: SMS group GmbH, 40237 Düsseldorf (DE)
(72) Erfinder: PLOCIENNIK, Christian, 40878 Ratingen (DE); SCHÖCK, Hans-Wilhelm, 47239 Duisburg (DE); MOORS, Mark, 53117 Bonn (DE)
(74) Vertreter: Klüppel, Walter
(86) Internationale Anmeldenummer: PCT/EP2010/000688
(87) Internationale Veröffentlichungsnummer: WO 2010/089114

(56) Entgegenhaltungen:
- JP-A- 3 071 959
- JP-A- 7 016 739
- JP-A- H0 623 525
- JP-A- 2001 047 217
- KR-A- 20030 001 661
- KR-A- 20030 016 127
- US-A- 3 665 148
- US-A- 5 037 672
- US-A- 6 073 678
- US-A1- 2004 216 859

## Beschreibung

### 1. Gebiet der Erfindung

Die Erfindung betrifft eine Vorrichtung, die im Gefahrenbereich von Arbeitsplätzen in den Produktionslinien der Stahlerzeugung mannigfaltige Aufgaben in verschiedensten Betriebsarten ausführen kann.

### 2. Stand der Technik

Die Arbeitstätigkeiten in hütten- und walzwerkstechnischen Anlagen sind geprägt von hohen Lasten, extremer Strahlungswärme und gefährlichen Tätigkeiten beim Umgang mit der flüssigen Metallschmelze bzw. den für die Umformung notwendigen Temperaturen.

Der Erfindung liegt der Gedanke zu Grunde, die Arbeitsbereiche hinsichtlich der oben angeführten Merkmale günstig zu gestalten und alle erforderlichen Maßnahmen zur größtmöglichen Automatisierung von Arbeitsabläufen zu realisieren.

Für eine Vielzahl von Arbeiten werden bereits Roboter eingesetzt. Dabei werden in der Regel stationäre Roboter mit singulären Arbeitsbereichen verwendet, welche laufend wiederkehrende Tätigkeiten an Arbeitsplätzen in hütten- und walzwerkstechnischen Einrichtungen präzise durchführen. Zum Beispiel wird in der WO 2008/025562 A1 ein stationäres Robotersystem beschrieben, welches innerhalb eines eingezäunten Arbeitsbereiches (der Roboterzelle) am Pfannenwartungsstand den Boden einer Pfanne bearbeitet.

Grundsätzlich wird bei solchen Lösungen jedem Roboter ein abgegrenzter Arbeitsplatz zugeordnet, wodurch bei Ausfall eines Roboters die Arbeiten nicht von anderen Robotern übernommen werden können und somit manuelle Eingriffe des Bedienpersonals notwendig werden.

Insgesamt werden durch die große Menge an Robotern die Investitions- und Betriebskosten erheblich erhöht ohne die Verfügbarkeit der Roboter an ihren Arbeitsplätzen zu verbessern.

Daraus resultierend sind Lösungen bekannt (beispielsweise WO 2005118182A1 und JP-A- 3-071959) bei denen Schienen- oder Fahrwege verwendet werden, um verschiedenen Arbeitspositionen, die außerhalb der Reichweite einer einzigen Einsatzposition eines Roboters liegen, zu erreichen bzw. den Roboter aus dem Gefahrenbereich bewegen zu können.

Nachteilig am Stand der Technik ist, dass durch die Bodenbindung der genannten Systeme Stolper- und Unfallgefahren für das Bedienpersonal bestehen. Des Weiteren sind bodengebundene Fahrsysteme gerade in hüttentechnischen Anlagen aufgrund der Möglichkeit unplanmäßig austretenden Flüssigstahls sehr störanfällig.

Ferner stellen die bekannten bodengebundenen Lösungen bei plötzlichen Störungen z. b: im Konverter-/Schmelz-/Gießbetrieb Behinderungen dar und erschweren einen schnellen und problemkonzentrierten Einsatz des Bedienpersonals. Des Weiteren weisen die bisherigen Robotersysteme ein erhebliches Beschädigungsrisiko bei Betriebsstörungen, wie beispielsweise auslaufendem Flüssigmetall auf.
Aus der KR 2003 0001661 A ist eine arbeitsraumerweiternde Vorrichtung bekannt, bei welcher der Roboter auf einem Gestell angeordnet ist, wobei dieses Gestell verfahrbar und zudem auf einem weiter verfahrbaren Träger angeordnet ist. Dieses Gestell überspannt den zum Manipulieren von Tauchausgüssen metallurgischer Gefäße ausgebildeten einen Arbeitsplatz.

Aus der US 5,037,672 A ist eine arbeitsraumerweiternde Vorrichtung bekannt, deren Arbeitsbereich mehrere zugeordnete Arbeitsplätze überspannt, wobei an der Vorrichtung kein verfahrbarer Industrieroboter oder Manipulator angeordnet ist. Dort ist an der verfahrbaren und arbeitsraumerweiternden Vorrichtung eine Sprühlanze angeordnet.

Die US 2004/216859 A1 offenbart ein Barrengießsystem mit angeschlossenem Kühlabschnitt und nachfolgender Entformungsstation. Hierbei sind einerseits ein Gußformen bewegendes Karussell und andererseits eine Kranvorrichtung als Hilfsmittel vorgesehen.

Die US 6,073,678 A offenbart roboterarbeitsraumweiternde Vorrichtungen, an welchen jeweils ein Roboter mehreren Arbeitsplätzen einsatzfähig zuführbar ist, wobei die Vorrichtung ihren Arbeitsbereich in mehrere zugeordnete Arbeitsplätze erreichbarer Weise überspannt. Die roboterraumerweiternde Vorrichtung ist längs einer Verfahrachse verfahrbar.

Die JP 07016739 A offenbart einen auf zwei parallel verlaufenden Schienen verfahrbaren Roboter.

Die KR 2003 0016127 A offenbart eine Robotersprühpistole, die auf einem verfahrbaren Wagen angeordnet ist. Dieser Wagen bzw. die darauf befindliche Roboterspritzpistole ist nicht innerhalb des Arbeitsbereiches der verfahrbaren Vorrichtung mehreren Arbeitsplätzen einsatzfähig zufühbar.

Die JP 03071959 A offenbart einen Roboter, der sich ortsfest und stationär auf einer Arbeitsbühne befindet, wobei es zudem sein kann, dass der Roboter auch an einer Plattform, welche sich am Verteilerinnengefäßwagen befindet, befestigt ist. In diesem Sinne fährt der Roboter dann mit seinem Arbeitsplatz mit.

Das Dokument US 3,665,148 A beschreibt einen Roboter oder Manipulator, der einen einen Arbeitsplatz umfassenden Arbeitsbereich aufweist und der im Bereich dieses Arbeitsplatzes in Richtung der Transportbewegung eines zu bearbeitenden Gegenstandes auf einer Plattform bewegbar ist und sich zudem um fünf weitere Achsen bewegen kann.

### 3. Aufgabe der Erfindung

Der Erfindung liegt somit die Aufgabe zugrunde die vorher aufgeführten Nachteile zu vermeiden und eine Vorrichtung mit mindestens einem Robotersystem zu schaffen, welche dennoch einen erheblich größeren Arbeitsraum erlaubt. Diese Aufgabe wird durch eine Vorrichtung, umfassend die Merkmale des Anspruchs 1, gelöst. Vorteilhaftere Ausgestaltungen der Erfindung sind in den abhängigen Ansprüchen definiert.

### 4. Zusammenfassung der Erfindung

Erfindungsgemäß wird eine arbeitsraumerweiternde Vorrichtung geschaffen, an der sich Roboter in unterschiedlicher Bauart, Achsenzahl, Tragfähigkeit und Steuerungsart befinden. Beispielhaft können für die Bauart und Ausführungsform der Handhabungsgeräte Seilzugroboter, Scara- und Knickarmroboter oder Parallelkinematiken sowie deren Kombinationen verwendet werden.

Die (Roboter-)Arbeitssraumerweiternde Vorrichtung ist als Brückenkran- oder Portalkran oder deren Kombination ausgeführt, wodurch eine Kombination von translatorischen Bewegungen des Industrieroboters das Erreichen gegebenenfalls einer beliebigen Ebenen- oder Raumkoordination ermöglicht.

Sonderbauarten, wie Kombinationen aus Industrieroboter mit einem Portal- oder Brückenkran vereinen dabei die Vorteile eines den Arbeitsraum erweiternden Portalkrans bzw. Brückenkrans mit den enormen Potenzialen moderner Industrieroboter, insbesondere bei Verwendung von flexiblen Automatisierungslösungen.

In der Ausführung als Brückenkran werden über einem jeweils mehrere Arbeitsplätze umfassenden Bereich aufgeständerte (d. h. Tragkonstruktionen wie Gestelle oder Stützen sind mit Fußboden verbunden) oder flurfreie (d. h. an Decke oder Wand befestigt) Laufschienen errichtet, auf denen mindestens eine mit Fahrwerken ausgerüstete Kranbrücke angeordnet ist, auf der sich wiederum eine ebenfalls mit Fahrwerken ausgerüstete Laufkatze befindet, die wiederum eine Führungssäule mit Antrieben für die vertikale Bewegung aufweist und an deren Ende ein Handhabungsgerät, vorzugsweise ein Knickarmroboter befestigt ist. Das Handhabungsgerät kann sowohl aufrecht stehend, über Kopf, als auch seitlich montiert werden. Je nach Ausführung der Bewegungsachsen und Gelenke des Handhabungsgeräts ergeben sich Arbeitsräume unterschiedlicher Form (quaderförmig, zylinderförmig, bis zu räumlich unbegrenzt z.B. beim Seilzugroboter).

Bei der Brückenkranbauweise können verschiedene Ausführungsformen eingesetzt werden: Die Anordnung als Linear-Brückenkran, der seinen Arbeitsbereich wie eine Linie überspannt (Linienportal), die Anordnung als Ausleger-Brückenkran, für kurze Strecken erlaubt eine zusätzliche Bewegung orthogonal zur Kranlängsachse (Auslegerportal) und die Ausführung als Flächen-Brückenkran, bei dem das Handhabungsgerät auch über eine große Fläche beliebig positioniert wird (Flächenportal).

Vorteilhafterweise kann auf derselben Kranbrücke zu dem Handhabungsgerät eine konventionelle Hubwinde angebracht sein.

In der Ausführung als Portalkran werden über einem jeweils mehrere Arbeitsplätze umfassenden Bereich bodengebundene Laufschienen für die Tragkonstruk- tion / das Gestell angebracht. Dies kann in 2 Varianten ausgeführt werden: (A) auf dem Boden verlaufenden Schienenlaufbahn / Gleislaufbahn oder (B) als gleislose Variante auf Rädern/Raupenwerk. Der weitere Aufbau entspricht dem des Brückenkran-Aufbaus.

Je nach gewählter Ausführung der arbeitssraumerweiternden Vorrichtung (Linear-Ausleger- und Flächenportal) ergeben sich entsprechend linien- bzw. flächenförmig oder räumliche Arbeitsraumerweiterungen.

Bei der (Roboter-)Arbeitssraumerweiternden Vorrichtung in einer Bauform als Kombination von Brücken- und Portalkran sind Laufschienen sowohl auf der Tragkonstruktion befestigt (aufgeständerte Bauweise) als auch zusätzlich auf dem Boden angeordnet, zum Verfahren der Tragkonstruktion / des Gestells. Dies kann ebenso in den 2 Varianten, wie oben beschrieben, ausgeführt werden.

Aufgrund der mehrere Arbeitsplätze überspannenden Gestaltung der Vorrichtung können die Laufschienen bei der schienen- und gleisgebunden Bauweise außerhalb von Bereichen mit Gefährdung durch auslaufenden Flüssigstahl angeordnet werden.

Die Anforderungen an die Konstruktion der vorgeschlagenen Vorrichtung für den Einsatz in hütten- und walzwerkstechnischen Einrichtungen (Heißbereiche, Handhabung und Transport von mehreren hundert Kilogramm bis zu tonnenschweren Teilen im unmittelbaren Umfeld, Einsatz für Groß- und Schwermaschinen) sind jedoch ungleich komplexer im Vergleich zu dem Bereich des allgemeinen Maschinenbaus. Die ausgeführte Konstruktion ist entsprechend stabil und robust.

Die gewählte Ausführung ermöglicht es, jeden Punkt innerhalb des durch die arbeitssraumerweiternde Vorrichtung gegebenen Arbeitsbereiches zu erreichen und somit einer beliebig großen Anzahl von Arbeitsplätzen zuzuordnen.

Wird diese so gewählte Ausführung zusätzlich mit einem dynamischen Sicherheitskonzept kombiniert, können alle Vorteile eines automatisierten Systems hinsichtlich Ergonomie, Arbeitssicherheit, Prozessoptimierung sowie Produktionssteigerung voll ausgeschöpft werden.

Die gewählte Ausführung ermöglicht es, jeden Punkt innerhalb des durch das Portal gegebenen Arbeitsbereiches zu erreichen und somit eine beliebig große Anzahl von Arbeitsplätzen anzuordnen, insbesondere auch dann, wenn diese auf verschiedenen Höhen gelegen sind.

Ebenso vorteilhaft ergibt sich aus dieser Ausführung, dass der Bodenbereich frei bleiben kann, so dass ein Arbeiter auch in direkter Nähe des (möglicherweise temporär stillgesetzten) Roboters barrierefrei arbeiten kann, d.h. ohne dass sein Weg dabei behindert wird. Dies führt vorteilhafterweise zu barrierefreien Hallenböden und Arbeitsbühnen.

In der Ausführung als flexible Automatisierungslösung des Handhabungsgerätes, welche die direkte Zusammenarbeit zwischen Roboter und Arbeiter gestattet, ist die arbeitsraumerweiternde Vorrichtung von zusätzlichem Vorteil, da das Handhabungsgerät weitestgehend aus dem Aufenthaltsraum des Menschen heraus gehalten werden kann (Werker auf Hallenbodenniveau, Handhabungsgerät oberhalb).

Es kann eine Anbindung an das Prozessleitsystem erfolgen, so dass aktueller Betriebsmodus, Arbeitsfortschritt wie auch sensorische Beobachtungen weiter gemeldet werden können.

Die Erfindung umfasst des weiteren die Einbindung von mindestens einem Roboter auf der arbeitsraumerweiternden Vorrichtung, wobei von einem Prozessrechner oder einer zentralen Leiteinrichtung Steuersignale an die arbeitsraumerweiternde Vorrichtung und / oder dem Handhabungsgerät oder -apparaten gegeben werden.

### 5. Kurze Beschreibung der Figuren

Beispielhaft ist eine solche Ausführung für verschiedenartigste Aufgaben auf der Gießbühne einer Stranggießanlage in den Bildern 1 bis 3 dargestellt.

In diesem zeigt:
- Fig. 1: eine Draufsicht eines Brückenkrans in einer Gießmaschine,
- Fig. 2: eine Seitenansicht eines Portalkrans/Brückenkrans an einer Gießmaschine und
- Fig. 3: eine weitere Seitenansicht eines einer Gießmaschine zugeordneten Portal- oder Brückenkrans.

### 6. Detaillierte Beschreibung der Figuren

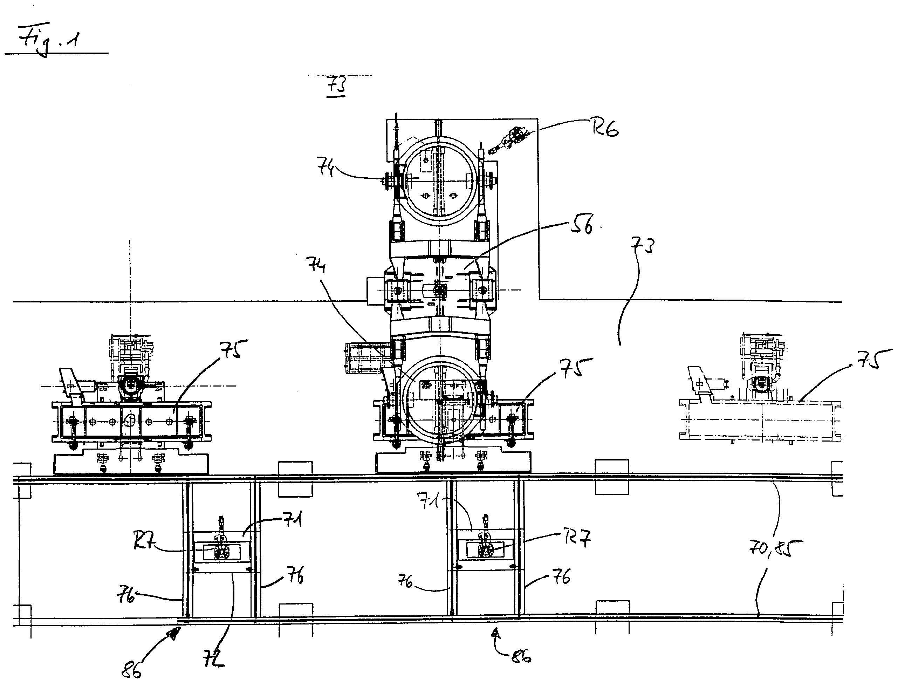

Fig. 1 zeigt die Gießmaschine 73 in schematischer Draufsicht, woraus die Ausführung der arbeitsraumerweiternden Vorrichtung als Brückenkran ersichtlich wird. Hierbei überdeckt der Brückenkran die gesamte Breite der Gießbühne, so dass der Roboter R7 zu verschiedenen Arbeitsplätzen bewegt werden kann. Der Roboter ist dabei durch eine Teleskopiereinrichtung 72 vertikal beweglich an einer Laufkatze 71 angebracht, die wiederum auf einer Kranbrücke 76 beweglich angebracht ist, welche wiederum auf zwei fest montierten Kranbahnen / Laufschienen 70 beweglich angeordnet sind. Die Kranbahnen 70 sind auf einer Tragkonstruk-tion / Gestell 85 angeordnet. Die drei orthogonal zueinander angeordneten Achsen ergeben damit einen dreidimensionalen, räumlichen Bewegungsraum. Neben einem so verfahrbaren Roboter R7, der gegebenenfalls für jeweils durchzuführende Arbeitstätigkeiten ausreichend ist, können wie dargestellt zwei Industrieroboter R7 vorgesehen sein, die sich auf den gemeinsamen Kranbahnen 70 bewegen. Befindet sich die Verteilerrinne 75 in Gießposition, wird ihr die in Fig. 1 rechte Kranbrücke 86 mit der Laufkatze 71 und dem Roboter R7 zugeordnet', während der die jeweils linke Krankbrücke, Laufkatze und Roboter der linken Verteilerrinne zugeordnet sind um beispielsweise Wartungsaufgaben vorzunehmen.

Hierdurch wird das Prinzip der realisierten Arbeitsraumerweiterung verdeutlicht. In dem vorliegenden Beispiel liegen die Arbeitsgebiete teilweise sogar außerhalb von der arbeitsraumerweiternden Vorrichtung umschlossenen Raumes. Durch die Ausführung als Knickarmroboter kann in diesem Beispiel der Roboter R7 auch außerhalb des durch die Trägerkonstruktion begrenzten Bereichs Tätigkeiten ausführen.

Der Roboter kann dabei mit einem Sensorroboter (nicht dargestellt) gekoppelt werden, der es ermöglicht den Ort und den Bereich der Arbeitstätigkeit des Roboters R7 exakt zu detektieren und gegebenenfalls für das Bedienpersonal erkennbar visualisiert auf einem Bildschirm darzustellen. Der auf einem (nicht dargestellten) Verteilerrinnenwagen angeordnete Verteilerrinne 75 ist dann neben dem Gießroboter R7 auch der Sensorroboter zugeordnet.

Der jeweilige Industrieroboter R7 kann bei einer Portalkranausführung oder Brückenkranausführung sowohl über Kopf als auch seitlich montiert werden. Der Roboter kann von einem Arbeitsplatz zu einem anderen, sowohl mit aktiviertem als auch mit deaktiviertem Roboterarm, verfahren werden. Der besondere Vorteil einer Portalkranausführung oder Brückenkranausführung besteht darin, dass beispielsweise die Gießmaschine 73 oder jeglicher von dem jeweiligen Industrieroboter R7 zu bedienende Hütten- und Walzwerkbetriebsarbeitsbereich bodenseitig frei zugänglich bleibt, da der Roboter von oben in diesen jeweiligen Arbeitsbereich hineingeführt werden kann. Dies ist insbesondere hinsichtlich durchzuführender Rüstvorgänge und Überwachungstätigkeiten sowie im Falle von Störfällen von Vorteil.

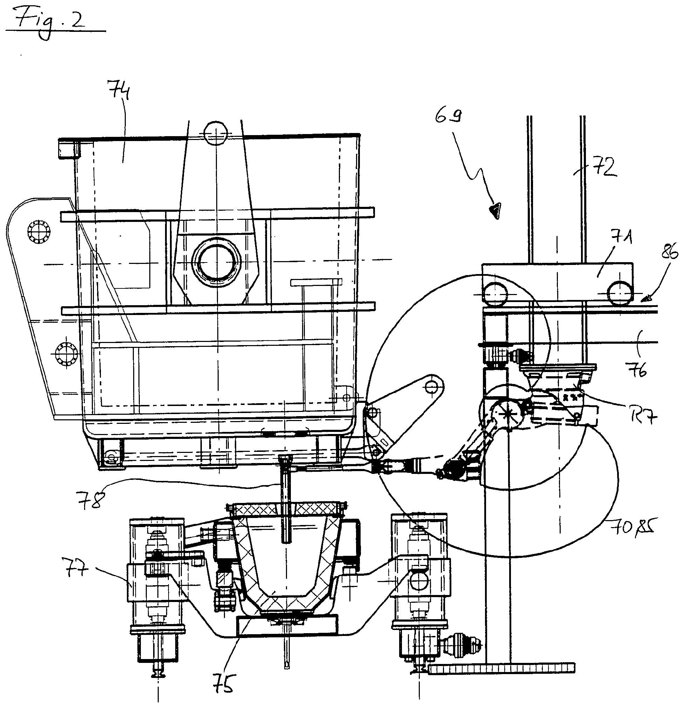

Der so dargestellte Gießroboter R7 kann nach der Rotation der Stahlgießpfanne 74 verschiedenste Tätigkeiten und Aufgaben an unterschiedlichen Plätzen auf und oberhalb der Gießbühne wahrnehmen. Zu diesen Tätigkeiten gehört das Setzen von Gießhülsen, das An- und Abkuppeln des Schattenrohres 78 (Fig. 2), das Aktivieren des Pfannenschieberverschlusses sowie gegebenenfalls das Aufbrennen der Pfanne mit einer Sauerstofflanze oder die Reinigung des Schattenrohrs 78. Im Verteilerbereich führt der Gießroboter R7 Messtätigkeiten wie das Messen der Badspiegelhöhe in der Verteilerrinne 75, das Messen der Temperatur der Schmelze in der Verteilerrinne 75, das Entnehmen von Proben aus der Schmelze aus der Verteilerrinne 75 sowie gegebenenfalls den Auftrag von Abdeckpulver auf die Schmelze in der Verteilerrinne 75 durch. Hierzu ist der Gießroboter R7 gegebenenfalls mit einem Messund Probennahmewerkzeug sowie gegebenenfalls mit einem Werkzeug zur Aufbringung des Abdeckpulvers ausgestattet. Im Kokillenbereich kann ein Gießroboter R7 die Tätigkeit des Aufbringens von Gießpulver auf den Gießspiegel unterhalb der Verteilerrinne 75 durchführen, sowie die Detektion und Beseitigung von Gießpulveranbackungen. In diesem Fall ist der Gießroboter R7 wiederum mit einem Werkzeug für das Aufbringen von Gießpulver, bzw. einem Werkzeug zum Entfernen von Anbackungen, ausgestattet. Zudem kann eine weitere Tätigkeit im Kokillenbereich für den Gießroboter R7 im Wechsel von (nicht dargestellten) Tauchrohren während des Gießens bestehen. Ebenfalls im Kokillenbereich führt der Gießroboter R7 das Setzen von Körben oder Trennplatten für den Guss verschiedener Stahlgüten durch, wobei der Industrieroboter R7 dort einen Verbundkorb oder eine Trennplatte setzen kann.

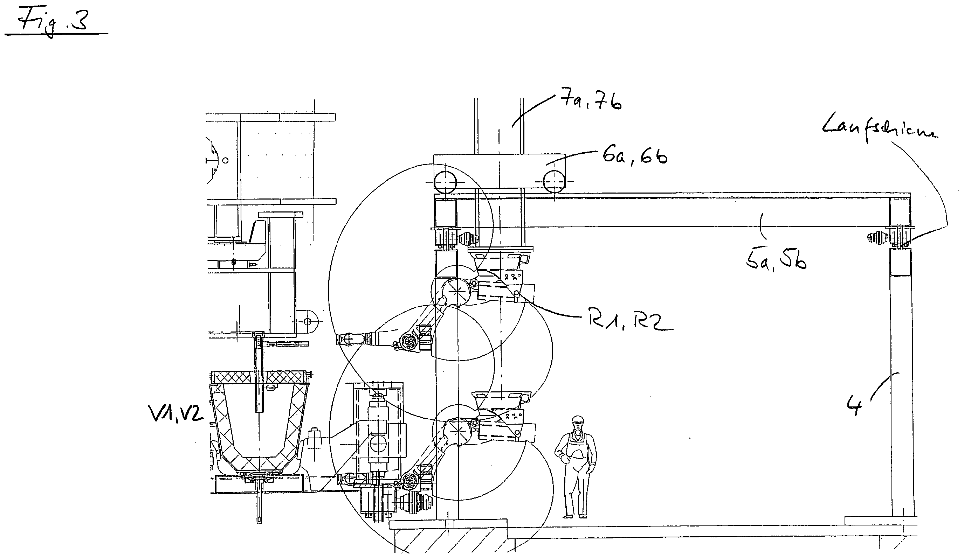

Unter Verweis auf Fig. 3 überdeckt die arbeitsraumerweiternde Vorrichtung in Brückenkranbauform (4) die gesamte Breite der Gießbühne. Vorteilhafterweise sind in diesem Ausführungsbeispiel zwei Kranbrücken als Schiene (5a, 5b) mit jeweils einer Laufkatze (6a,6b) und jeweils einem Universalroboter (R1 ,R2) angeordnet. Befindet sich die Verteilerrinne (V1) in Gießposition, wird ihr die Kranbrücke (5a) mit der Laufkatze (6a) und dem Roboter (R1) zugeordnet. Die Kranbrücke (5b) mit der Laufkatze (6b) und dem Roboter (R2) kann dann notwendige Arbeiten an der Verteilerrinne (V2) ausführen.

Fig. 3 zeigt die Erweiterung des Bewegungsraums des Roboters durch die vertikale Verschiebung des Roboterarbeitsraums. Daran wird das Prinzip der realisierten Arbeitsraumerweiterung deutlich.

Ein weiteres Beispiel für die Anwendung der erfindungsgemäßen Vorrichtung ist ein mit mehreren Kippstühlen ausgeführter Pfannenplatz, an welchem Wartungsarbeiten an Gießpfannen im Stahlwerk durchgeführt werden.

## Patentansprüche

1. Vorrichtung, die als Bestandteil einer hüttenwerkstechnische Anlage ausgebildet ist, die eine Gießmaschine (73) mit zwei Verteilerrinnen (75; V1, V2) und zugeordneter Stahlgießpfanne (74) sowie die Vorrichtung umfasst, die als Brücken- (4) oder Portalkran oder als Kombination von Brücken- und Portalkran ausgeführt ist, wobei die Vorrichtung an der die Verteilerrinnen (75; V1, V2) mit zugeordneter Stahlgießpfanne (74) aufweisenden Gießmaschine (73) angeordnet ist und der Kran die gesamte Breite einer Gießbühne der Gießmaschine (74) überdeckt und mehrere Arbeitsplätze verfahrbar erreichbar überspannt, wobei der Kran mit mindestens zwei gesteuerte Arbeitstätigkeiten an der oder im Bereich der hüttenwerkstechnischen oder walzwerkstechnischen Anlage durchführenden Industrierobotern (R7; R1, R2) ausgestattet ist, welche einen zugeordneten Arbeitsraum aufweisen und mittels der Vorrichtung mehreren Arbeitsplätzen einsatzfähig zuführbar sind, wobei die mindestens zwei Industrieroboter (R7; R1, R2) mittels der derart arbeitsraumerweiternden Vorrichtung in mindestens zwei nicht zueinander parallelen und zueinander unabhängigen Verfahrachsen verfahrbar sind und jeweils mittels einer Teleskopiereinrichtung (72; 7a, 7b) vertikal beweglich an einer Laufkatze (71; 6a, 6b), die beweglich auf einer Kranbrücke (76; 5a, 5b) abgebracht ist, welche ihrerseits auf zwei fest auf einer Tragkonstruktion (85) montierten Laufschienen (70) beweglich angeordnet ist, angeordnet sind, so dass jeweils drei orthogonal zueinander angeordnete Achsen einen dreidimensionalen, räumlichen Bewegungsraum für die Industrieroboter (R7; R1, R2) definieren, wobei die Industrieroboter (R7; R1, R2) eingerichtet sind, sowohl im aktivierten als auch im deaktivierten oder festgesetzten Zustand von einem ersten Arbeitsplatz zu einem zweiten Arbeitsplatz innerhalb des Bewegungsraums der arbeitsraumerweiternden Vorrichtung verfahren zu werden und zum Betrieb des Anlagenbereichs unter Einbindung der Industrieroboter (R7; R1, R2) der arbeitsraumerweiternden Vorrichtung von einem Prozessrechner oder einer zentraler Leiteinrichtung Steuersignale zu em p-fangen.

2. Vorrichtung nach Anspruch 1, **dadurch gekennzeichnet, dass** ihre Verfahrachsen aufgeständerte und/oder bodengebundene Laufschienen oder flurfreie Laufschienen sind.

3. Vorrichtung nach Anspruch 1 oder 2, **dadurch gekennzeichnet, dass** die Industrieroboter (R7; R1, R2) in mindestens zwei translatorischen Verfahrachsen verfahrbar sind.

4. Vorrichtung nach einem der vorhergehenden Ansprüche, **dadurch gekennzeichnet, dass** zum Verfahren der Vorrichtung innerhalb einer Verfahrachse mehrere unterschiedliche Ausführungen der Laufbahnen, vorzugsweise Gleisbahnen, Fahrbahnen, Schienen, oder Hängebahnen, gleichzeitig einsetzbar sind.

5. Vorrichtung nach einem der vorhergehenden Ansprüche, **dadurch gekennzeichnet, dass** die Vorrichtung mit einer Hubwinde oder einem Hebezeug ausgestattet ist.

6. Vorrichtung nach einem der vorhergehenden Ansprüche, **dadurch gekennzeichnet, dass** der Industrieroboter (R7; R1, R2) oder Manipulator als Knickarmroboter, als Scararoboter, als Seilzugroboter, als Parallelkinematik oder als eine Kombination aus diesen ausgeführt ist.

## Claims

1. Device constructed as a component of a metallurgical plant, which comprises a casting machine (73) with two distributor channels (75; V1, V2) and associated steel pouring ladle (74) as well as the device, which has the configuration of a gantry crane (4) or portal crane or a combination of gantry and portal crane, wherein the device is arranged at the casting machine (73) having the distributor channels (75; V1, V2) with associated steel pouring ladle (74) and the crane covers the entire width of a casting platform of the casting machine (74) and spans several working positions reachable by movement, wherein the crane is equipped with at least two industrial robots (R7; R1, R2), which perform controlled working activities at, or in the region of, the metallurgical or rolling-mill plant and which have an associated work space and can be delivered by means of the device to several work places to be capable of use, wherein the at least two industrial robots (R7; R1, R2) are movable by means of the device, which extends the work space in that way, in at least two mutually non-parallel and mutually independent movement axes and are each arranged, to be vertically movable by means of a telescopic device (72; 7a, 7b), on a trolley (71; 6a, 6b) movably mounted on a crane gantry (76; 5a, 5b), which in turn is movably arranged on two guide rails (70) fixedly mounted on a support construction (85), so that in each instance three mutually orthogonal axes define a three-dimensional spatial movement space for the industrial robots (R7; R1, R2), wherein the industrial robots (R7; R1, R2) are arranged to move not only in the activated state, but also in the deactivated or static state, from a first work place to a second work place within the movement space of the device extending the workspace and, for operation of the plant area with inclusion of the industrial robots (R7; R1, R2) of the device extending the work space, to receive control signals from a process computer or a central control device.

2. Device according to claim 1, **characterised in that** its movement axes are elevated and/or floor-bound guide rails or floor-free guide rails.

3. Device according to claim 1 or 2, **characterised in that** the industrial robots (R7: R1, R2) are movable in at least two translational movement axes.

4. Device according to any one of the preceding claims, **characterised in that** for movement of the device within a movement axis simultaneous use can be made of several different realisations of the guide tracks, preferably rail tracks, travel paths, rails or suspension tracks.

5. Device according to any one of the preceding claims, **characterised in that** the device is equipped with a lifting winch or a hoist.

6. Device according to any one of the preceding claims, **characterised in that** the industrial robot (R7; R1, R2) or manipulator is constructed as an articulated arm robot, as an SCARA robot, as a cable-pull robot, as a parallel kinematic system or as a combination of these.

## Revendications

1. Dispositif qui est réalisé sous la forme d'un élément constitutif d'une installation sidérurgique qui comprend une machine de coulée (73) comprenant deux goulottes de distribution (75; V1, V2) et une poche de coulée d'acier (74) qui leur est attribuée, et qui comprend le dispositif qui est réalisé sous la forme d'un pont roulant (4) et d'une grue à portique ou sous la forme d'une combinaison d'un pont roulant et d'une grue à portique ; dans lequel le dispositif est disposé contre la machine de coulée (73) présentant les goulottes de distribution (75; V1, V2) avec la poche de coulée d'acier (74) qui leur est attribuée et la grue surplombe toute la largeur d'une plate-forme de la machine de coulée (74) et s'étend sur plusieurs postes de travail de manière à pouvoir atteindre ces derniers par déplacement; dans lequel la grue est équipée d'au moins deux robots industriels (R7; R1, R2) effectuant des activités de travail commandées dans l'installation sidérurgique ou de laminage ou bien dans les environs immédiats de ladite installation, robots qui présentent un espace de travail qui leur est attribué et qui peuvent être acheminés de manière opérationnelle au moyen du dispositif à plusieurs postes de travail ; dans lequel lesdits au moins deux robots industriels (R7; R1, R2) peuvent se déplacer, au moyen du dispositif élargissant de cette manière l'espace de travail, dans au moins deux axes de déplacement indépendants l'un de l'autre et non parallèles l'un à l'autre et sont disposés respectivement au moyen d'un mécanisme télescopique (72 ; 7a, 7b) en mobilité verticale contre un chariot roulant (71 ; 6a, 6b) qui est appliqué en mobilité sur un pont roulant (76 ; 5a, 5b) qui est disposé pour sa part en mobilité sur deux rails de roulement (70) montés à demeure sur une structure de support (85), d'une manière telle que, respectivement, trois axes disposés en position réciproquement orthogonale définissent un espace de mouvement sous la forme d'un espace en trois dimensions pour les robots industriels (R7; R1, R2) ; dans lequel les robots industriels (R7 ; R1, R2) sont conçus pour pouvoir se déplacer, aussi bien à l'état activé qu'à l'état désactivé ou fixé, d'un premier poste de travail à un deuxième poste de travail au sein de l'espace de mouvement du dispositif élargissant l'espace de travail, et pour la mise en service de la zone de l'installation en associant aux robots industriels (R7 ; R1, R2) du dispositif élargissant l'espace de travail un ordinateur de processus ou un dispositif de guidage central pour la réception de signaux de commande.

2. Dispositif selon la revendication 1, **caractérisé en ce que** ses axes de déplacement représentent des rails de roulement disposés sur un socle et/ou reliés au sol ou des rails de roulement aériens.

3. Dispositif selon la revendication 1 ou 2, **caractérisé en ce que** les robots industriels (R7; R1, R2) sont à même de se déplacer dans au moins deux axes de déplacement par translation.

4. Dispositif selon l'une quelconque des revendications précédentes, **caractérisé en ce que**, pour le déplacement du dispositif au sein d'un axe de déplacement, on peut mettre en oeuvre en même temps plusieurs formes de réalisation différentes des chemins de roulement, de préférence des chemins de glissement, des pistes de roulage, des rails ou des chemins suspendus.

5. Dispositif selon l'une quelconque des revendications précédentes, **caractérisé en ce que** le dispositif est équipé d'un vérin de levage ou d'un engin élévateur.

6. Dispositif selon l'une quelconque des revendications précédentes, **caractérisé en ce que** le robot industriel (R7 ; R1, R2) ou le manipulateur est réalisé sous la forme d'un robot du type à bras articulés, sous la forme d'un robot « Scara », sous la forme d'un robot du type à la traction par câble, sous la forme d'une cinématique parallèle ou sous la forme d'une combinaison des éléments précités.
